# EUROPÄISCHE PATENTSCHRIFT

(11) **EP 1 979 401 B1**
(45) Veröffentlichungstag und Bekanntmachung des Hinweises auf die Patenterteilung: **29.09.2010**
(21) Anmeldenummer: 07703816.4
(22) Anmeldetag: 12.01.2007
(51) Int. Cl.: C08J 9/18, C08J 9/232

(54) **SCHAUMSTOFFE AUF BASIS THERMOPLASTISCHER POLYURETHANE**
FOAMS BASED ON THERMOPLASTIC POLYURETHANES
MOUSSE A BASE DE POLYURETHANE THERMOPLASTIQUE

(30) Priorität: 18.01.2006 EP 06100506
(43) Veröffentlichungstag der Anmeldung: 15.10.2008
(73) Patentinhaber: BASF SE, 67056 Ludwigshafen (DE)
(72) Erfinder: PRISSOK, Frank, 49448 Lemförde (DE); BRAUN, Frank, 67063 Ludwigshafen (DE)
(86) Internationale Anmeldenummer: PCT/EP2007/050274
(87) Internationale Veröffentlichungsnummer: WO 2007/082838

(56) Entgegenhaltungen:
- WO-A-00/44821
- WO-A-94/20568
- WO-A-2005/026243
- JP10168215, SEKISUI PLASTICS CO LTD: WPI WORLD PATENT INFORMATION DERWENT, DERWENT, GB, Bd. 1998, Nr. 35, 23. Juni 1998 (1998-06-23), XP002153120

## Beschreibung

Die Erfindung betrifft expandierbares, bevorzugt partikelförmiges, treibmittelhaltiges thermoplastisches Polyurethan, wobei das thermoplastische Polyurethan eine Shore-Härte zwischen A 44 und A 84, bevorzugt zwischen A 62 und A 82, besonders bevorzugt zwischen A 62 und A 80, aufweist. Dabei wird die Shore-Härte des TPU an dem kompakten, d.h. nicht expandiertem TPU gemessen. Außerdem betrifft die Erfindung Verfahren zur Herstellung von expandierbarem, bevorzugt partikelförmigem, treibmittelhaltigem thermoplastischen Polyurethan. Des weiteren bezieht sich die Erfindung auf Verfahren zur Herstellung von expandiertem thermoplastischen Polyurethan sowie Verfahren zur Herstellung von Schaumstoff auf der Basis von thermoplastischem Polyurethan sowie derart erhältliche Schaumstoffe bzw. expandierte thermoplastische Polyurethane.

Schaumstoffe, insbesondere auch Partikelschaumstoffe, sind seit langem bekannt und in der Literatur vielfach beschrieben, z.B. in Ullmanns "Encyklopädie der technischen Chemie", 4. Auflage, Band 20, S. 416 ff.

In der DE 4015714 A1 sind glasfaserverstärkte TPU-Schaumstoffe erwähnt, die auf einer Spritzgießmaschine hergestellt werden. Es werden in den Beispielen Dichten von 800 g/L und größer angegeben. Es handelt sich dabei um geschäumte TPU-Platten, nicht um Partikelschaumstoffe.

Partikelschaumstoffe auf Basis von thermoplastischem Polyurethan, in dieser Schrift auch als TPU bezeichnet, sind offenbart in WO 94/20568. Nachteilig an den in der WO 94/20568 beschriebenen TPU-Schaumstoffen ist der hohe Energieaufwand bei der Herstellung und Verarbeitung. Es wird ein Wasserdampfdruck von 4,5 bar bis 7 bar angewendet, also eine Temperatur von 145°C bis 165°C.

Weiterhin beschreibt die WO 94/20568 expandierte, d.h. aufgeschäumte, TPU-Partikel, die zu Formteilen verarbeitet werden können. Diese TPU-Schaumpartikel werden bei Temperaturen von 150°C und höher hergestellt und haben in den Beispielen eine Schüttdichte zwischen 55 und 180 g/L, was bei Transport und Lagerung dieser Partikel wegen des erhöhten Raumbedarfs von Nachteil ist.

Die Aufgabe der vorliegenden Erfindung bestand somit darin, einen TPU-Partikelschaumstoff zu entwickeln, der sich bei niedrigen Temperaturen herstellen lässt und gleichzeitig gutes Elastizitäts- und Temperaturverhalten besitzt. Eine weitere war es, expandierbare TPU-Partikel und expandierte TPU-Schaumpartikel sowie Verfahren zu ihrer Herstellung zu entwickeln, die sich bei niedrigen Temperaturen herstellen und verarbeiten lassen.

Diese Aufgaben konnten gelöst werden durch expandierbares, bevorzugt partikelförmiges, treibmittelhaltiges thermoplastisches Polyurethan, wobei das thermoplastische Polyurethan eine Shore-Härte zwischen A 44 und A 84, bevorzugt zwischen A 62 und A 82, besonders bevorzugt zwischen A 62 und A 80, aufweist, wobei der Schmelzbereich des thermoplastischen Polyurethans bei einer DSC-Messung mit einer Aufheizrate von 20 K/min unterhalb von 130°C, besonders bevorzugt unterhalb von 120°C beginnt und das thermoplastische Polyurethan bei 190°C und einem Auflagegewicht von 21,6 kg nach DIN EN ISO 1133 höchstens eine Schmelzflussrate (MFR) von 250g/10 min, besonders bevorzugt eine Schmelzflussrate von kleiner 200 g/10 min aufweist. Dabei wird die Shore-Härte des TPU an dem kompakten, d.h. nicht expandiertem TPU gemessen.

Der Vorteil der vorliegenden Erfindung besteht darin, dass TPU mit einer niedrigeren Härte, niedrigerem Schmelzpunkt und besserer Fließfähigkeit verwendet werden. Dadurch können die Temperaturen und Drücke bei der Herstellung der expandierten TPU-Partikel geringer gehalten werden. Gerade beim Einsatz von Wasserdampf ist es von Vorteil, bei niedrigeren Temperaturen arbeiten zu können. Zudem verkleben die Schaumpartikel aufgrund der Weichheit besser.

Ein weiterer Vorteil der erfindungsgemäßen thermoplastischen Polyurethane besteht in ihrer besseren Haptik.

Die erfindungsgemäßen TPU basieren bevorzugt auf Polyetheralkohol, besonders bevorzugt Polyetherdiol. Dabei kommt besonders bevorzugt Polytetrahydrofuran in Betracht. Besonders bevorzugt basiert das TPU auf Polytetrahydrofuran mit einem Molekulargewicht zwischen 600 g/mol und 2500 g/mol. Die Polyetheralkohole können sowohl einzeln als auch in Mischung untereinander zur Anwendung kommen.

Alternativ konnten gute Ergebnisse erzielt werden mit TPU, das auf Polyesteralkohol, bevorzugt Polyesterdiol, bevorzugt auf der Basis von Adipinsäure und Butan-1,4-diol, mit einem Molekulargewicht zwischen 600 g/mol und 900 g/mol basiert.

Thermoplastische Polyurethane und Verfahren zu deren Herstellung sind allgemein bekannt. Beispielsweise können TPU durch Umsetzung von (a) Isocyanaten mit (b) gegenüber isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4-und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemisch weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide. In einer weiteren Ausführungsform kann das TPU eine Phosphorverbindung enthalten. In einer bevorzugten Ausführungsform werden als Phosphorverbindungen Organophosphorverbindungen des trivalenten Phosphors, wie beispielsweise Phosphite und Phosphonite, verwendet. Beispiele für geeignete Phosphorverbindungen sind , Triphenyl phosphit, Diphenylalkylphosphit, Phenyldialkylphosphit, Tris-(nonylphenyl) phosphit, Trilaurylphosphit, Trioctadecylphosphit, Di-stearyl-pentaerythritol diphosphit, Tris-(2,4-di-tert-butylphenyl) phosphit, Di-isodecylpentaerythritol diphosphit, Di-(2,4-di-tert-butylphenyl)pentaerythritol diphosphit, Tristearyl-sorbitol triphosphit, Tetrakis-(2,4-di-tert-butylphenyl) 4,4'-diphenylylenediphosphonit, Trisisodecylphosphit, Diisodecylphenylphosphit und Diphenylisodecylphosphit oder Gemische daraus.

Die Phosphorverbindungen sind insbesondere dann geeignet, wenn sie schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane die Phosphorverbindungen geeignet, die besonders schwer hydrolysieren. Beispiele für solche Phosphorverbindungen sind Di-polypropylenglykolphenylphosphit, Tri-isodecylphosphit, Triphenylmonodecylphosphit, Trisisononylphosphit, Tris-(2,4-di-tert-butylphenyl) phosphit, Tetrakis-(2,4-di-tert-butylphenyl) 4,4'-diphenylylenediphosphonit und Di-(2,4-di-tert-butylphenyl)-pentaerythritol diphosphit oder Gemische davon.

Als Füllstoffe kommen organische und anorganische Pulver oder Faserstoffe, sowie Mischungen davon in Betracht. Als organische Füllstoffe können z.B. Holzmehl, Stärke, Flachs-, Hanf-, Ramie-, Jute-, Sisal- Baumwoll- Cellulose oder Aramidfasern eingesetzt werden. Als anorganische Füllstoffe können z.B. Silikate, Schwerspat, Glaskugeln, Zeolithe, Metalle oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, wie Eisenpulver, Glaskugeln, Glasfasern oder Kohlefasern. Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 0,1 bis 100 µm, bevorzugt im Bereich von 1 bis 50 µm. Bevorzugt sind expandierbare, treibmittelhaltige thermoplastische Polyurethane, die zwischen 5 bis 80 Gew.-% organische und/oder anorganische Füllstoffe enthalten, bezogen auf das Gesamtgewicht des treibmittelhaltigen thermoplastischen Polyurethans. Bevorzugt sind ferner expandierte thermoplastische Polyurethane, die zwischen 5 bis 80 Gew.-% organische und/oder anorganische Füllstoffe enthalten, bezogen auf das Gesamtgewicht des thermoplastischen Polyurethans.

Neben den genannten Komponenten a) und b) und gegebenenfalls c), d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Gegebenenfalls kann es zweckmäßig sein, das erhaltene TPU vor der Weiterverarbeitung bei 80 bis 120°C, vorzugsweise 100 bis 110°C über einen Zeitraum von 1 bis 24 Stunden zu tempern.

Die eingangs dargestellten erfindungsgemäßen TPU werden erfindungsgemäß zur Herstellung der expandierbaren, bevorzugt partikelförmigen, treibmittelhaltigen thermoplastischen Polyurethane, zur Herstellung von expandiertem thermoplastischen Polyurethan sowie zur Herstellung von Schaumstoff auf der Basis von thermoplastischem Polyurethan eingesetzt. Die Herstellung dieser Materialien aus den erfindungsgemäßen TPU wird nachfolgend beschrieben.

Die erfindungsgemäßen expandierten TPU-Partikel lassen sich prinzipiell durch Suspensions- oder Extrusionsverfahren direkt oder indirekt über expandierbare TPU-Partikel und Verschäumen in einem Druckvorschäumer mit Wasserdampf oder Heißluft herstellen.

Beim Suspensionsverfahren wird das TPU als Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen (expandierbaren) Partikel werden durch Erwärmen zu den expandierten Partikeln verschäumt-. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. WO 94/20568.

Beim Extrusionsverfahren wird das TPU in einem Extruder unter Aufschmelzen mit - einem Treibmittel vermischt, das dem Extruder zugeführt wird. Die treibmittelhaltige Mischung wird entweder unter solchen Druck- und Temperaturbedingungen ausgepresst und granuliert, dass das TPU-Granulat nicht schäumt (expandiert), wozu beispielsweise eine Unterwassergranulierung verwendet wird, die bei einem Wasserdruck von mehr als 2 bar betrieben wird. Man erhält treibmittelhaltige, expandierbare Partikel, die durch anschließendes Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel.

Das TPU kann als handelsübliches Granulat, Pulver, Grieß oder sonstiger Form eingesetzt werden. Zweckmäßigerweise wird ein Granulat eingesetzt. Geeignet ist z.B. ein sog. Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des TPU und ggf. weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein. Bevorzugt weist das treibmittelhaltige termoplastische Polyurethan einen mittleren Durchmesser zwischen 0,2 und 10 mm auf.

Die erfindungsgemäßen expandierbaren TPU-Partikel können nach dem Suspensionsverfahren oder nach dem Extrusionsverfahren hergestellt werden.

Je nach verwendetem Verfahren können die bevorzugten Treibmittel ggf. variieren. Beim Suspensionsverfahren verwendet man als Treibmittel bevorzugt organische Flüssigkeiten oder anorganische Gase oder Gemische davon. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Geeignete anorganische Gase sind Stickstoff, Luft, Ammoniak oder Kohlendioxid.

Bei der Herstellung via Extrusionsverfahren verwendet man als Treibmittel bevorzugt flüchtige organische Verbindungen mit einem Siedepunkt bei Normaldruck 1013 mbar von -25 bis 150, insbesondere -10 bis 125°C. Gut geeignet sind Kohlenwasserstoffe (bevorzugt halogenfrei), insbesondere C₄₋₁₀-Alkane, beispielsweise die Isomere des Butans, Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate.

Auch Halogenkohlenwasserstoffe können verwendet werden, bevorzugt ist das Treibmittel jedoch halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile eingesetztes TPU.

Beim Suspensionsverfahren arbeitet man in der Regel absatzweise in einem Imprägnierbehälter, z.B. in einem Rührkesselreaktor. In den Reaktor werden das TPU, z.B. als Minigranulat, eindosiert, außerdem Wasser bzw. ein anderes Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das TPU, verwendet.

Danach wird der Reaktor verschlossen und der Reaktorinhalt auf eine Imprägniertemperatur von üblicherweise mindestens 100°C erhitzt. Das Treibmittel kann dabei vor, während oder nach dem Aufheizen des Reaktorinhalts zugefügt werden. Die Imprägniertemperatur sollte in der Nähe der Erweichungstemperatur des TPU liegen. Es sind Imprägniertemperaturen von 100 bis 150, insbesondere 110 bis 145°C bevorzugt.

Je nach Menge und Art des Treibmittels sowie nach der Höhe der Temperatur stellt sich im verschlossenen Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren. Bei den Imprägnierbedingungen erhöhte Temperatur und Überdruck diffundiert Treibmittel in die Polymergranulatpartikel hinein. Die Imprägnierdauer beträgt im allgemeinen 0,5 bis 10 Stunden.

In einer Ausführungsform des Suspensionsverfahrens wird nach dem Imprägnieren die erhitzte Suspension auf üblicherweise unter 100°C abgekühlt, wodurch sich das TPU wieder verfestigt und das Treibmittel einschließt. Danach wird entspannt. Man erhält expandierbare TPU-Partikel, die schließlich in üblicher Weise aus der Suspension abgetrennt werden. Anhaftendes Wasser wird in der Regel durch Trocknen z.B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfernen.

Beim Extrusionsverfahren werden dem Extruder bevorzugt das TPU, das Treibmittel und ggf. Zusatzstoffe gemeinsam (als Mischung) oder getrennt voneinander, an einer oder an verschiedenen Stellen des Extruders zugeführt. Dabei ist es möglich, jedoch nicht erforderlich, vorab aus den festen Komponenten eine Mischung herzustellen. Beispielsweise kann man zunächst TPU und ggf. Zusatzstoffe mischen und die Mischung dem Extruder zuführen, wonach dem Extruder das Treibmittel zugeführt wird, d.h. der Extruder mischt das Treibmittel in eine Polymerschmelze ein. Ebenso kann man dem Extruder eine Mischung von Treibmittel und Zusatzstoffe zuführen, d.h. die Zusatzstoffe erst mit dem Treibmittel zugeben.

Im Extruder werden die genannten Einsatzstoffe unter Aufschmelzen des TPU vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das TPU als Schmelze vorliegt, beispielsweise bei 150 bis 250, insbesondere 180 bis 210°C.

Drehzahl, Länge, Durchmesser und Ausgestaltung der Extruderschnecke(n), zugeführte Mengen und Extruderdurchsatz werden in bekannter Weise derart gewählt, dass im extrudierten TPU die Zusatzstoffe gleichmäßig verteilt sind.

In einer Ausführungsform des Extrusionsverfahrens stellt man expandierbare Partikel her. Um zu verhindern, dass die treibmittelhaltige Schmelze bereits beim Austritt aus dem Extruder aufschäumt, wird der Schmelzestrang bei solchen Temperatur- und Druckbedingungen ausgepresst und granuliert, dass praktisch kein Aufschäumen (Expandieren) erfolgt. Diese Bedingungen können nach Art und Menge der Polymere, der Zusatzstoffe und insbesondere des Treibmittels verschieden sein. Die optimalen Bedingungen lassen sich durch Vorversuche einfach ermitteln.

Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei dem besonders bevorzugt Treibmittel s-Pentan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann. Man erhält auf diese Weise expandierbare TPU-Partikel, die anschließend vom Wasser abgetrennt und ggf. getrocknet werden. Danach werden sie zu expandierten TPU-Partikeln verschäumt wie weiter unten beschrieben.

Ein bevorzugtes Verfahren zur Herstellung von expandierbaren, treibmittelhaltigen TPU-Partikeln umfasst die Stufen:
i) Aufschmelzen von TPU gegebenenfalls mit Zusatzstoffen und Extrusion zu einem Granulat mit einem mittleren Durchmesser von 0,2 bis 10 mm,
ii) Imprägnieren des Granulates mit 0,1 bis 40 Gew.-%, bezogen auf das Gesamtgewicht des Granulats, eines flüchtigen Treibmittels in wässriger Suspension unter Druck, bevorzugt bei einem Druck zwischen 5 und 100 bar, bei Temperaturen im Bereich von 100 bis 150°C,
iii) Abkühlen der Suspension auf 20 bis 95°C,
iv) anschließendem Entspannen.

Durch Abkühlen wird das Treibmittel im Polymer eingeschlossen und das Produkt schäumt nicht auf. Wenn direkt bei hohen Temperaturen in Schritt ii) der Kessel entspannt wird, entweicht das Treibmittel und das bei diesen Temperaturen weiche Polymer expandiert.

Ein weiteres bevorzugtes Verfahren zur Herstellung von expandierbaren, treibmittelhaltigen TPU-Partikeln umfasst die Stufen:
i) Aufschmelzen von TPU zusammen mit 0,1 bis 40 Gew.-%, bezogen auf das Gesamtgewicht des Granulats, eines flüchtigen Treibmittels und gegebenenfalls mit Zusatzstoffen auf einem Extruder,
ii) Auspressen der Schmelze und Unterwassergranulieren des Schmelzestrangs bei Drucken von 2 bar bis 20 bar und Temperaturen zwischen 5°C und 95°C.

Bei diesem Verfahren wird durch Granulieren unter Wasser gegen Überdruck vermieden, dass das Treibmittel entweicht und das Polymer aufschäumt.

Besonders bevorzugt und Gegenstand der vorliegenden Erfindung ist somit auch ein Verfahren zur Herstellung von expandierbarem, bevorzugt partikelförmigem, treibmittelhaltigem thermoplastischen Polyurethan, wobei man ein thermoplastisches Polyurethan mit einer Shore-Härte zwischen A 44 und A 84, bevorzugt zwischen A 62 und A 80, gegebenenfalls zusammen mit Zusatzstoffen, zu einem Granulat mit einem mittleren Durchmesser von 0,2 bis 10 mm extrudiert, das Granulates mit 0,1 bis 40 Gew.-%, bezogen auf das Gesamtgewicht des Granulats, eines bevorzugt flüchtigen Treibmittels in wässriger Suspension unter Druck, bevorzugt bei einem Druck zwischen 5 und 100 bar, bei Temperaturen im Bereich von 100 bis 150°C imprägniert, die Suspension enthaltend die treibmittelhaltigen thermoplastischen Polyurethane auf 20 bis 95°C abkühlt und anschließend die treibmittelhaltigen thermoplastischen Polyurethane entspannt.

Besonders bevorzugt und Gegenstand der vorliegenden Erfindung ist ferner auch ein Verfahren zur Herstellung von expandierbarem, bevorzugt partikelförmigem, treibmittelhaltigem thermoplastischen Polyurethan, wobei man ein thermoplastisches Polyurethan mit einer Shore-Härte zwischen A 44 und A 84, bevorzugt zwischen A 62 und A 80, zusammen mit 0,1 bis 40 Gew.-%, bezogen auf das Gesamtgewicht des Granulats, eines bevorzugt flüchtigen Treibmittels und gegebenenfalls mit Zusatzstoffen auf einem Extruder aufschmilzt und die Schmelze unter Wasser bei Drucken von 2 bar bis 20 bar und Temperaturen zwischen 5°C und 95°C granuliert.

Sofern man expandierbare Partikel erhält, können diese in an sich bekannter Weise aufgeschäumt (verschäumt) werden, wobei die erfindungsgemäßen expandierten TPU-Partikel entstehen. Das Verschäumen erfolgt in der Regel durch Erwärmen der expandierbaren Partikel in üblichen Verschäumuhgsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), besonders bevorzugt bei Temperaturen zwischen 100 bis 140°C.

Gegenstand der vorliegenden Erfindung sind somit auch Verfahren zur Herstellung von Schaumstoffen auf der Basis von thermoplastischem Polyurethan, wobei man das erfindungsgemäße expandierbare, bevorzugt partikelförmige, treibmittelhaltige thermoplastische Polyurethan bei einer Temperatur zwischen 100°C und 140°C verschäumt. Gegenstand der vorliegenden Erfindung sind ferner derart erhältliche Schaumstoffe auf der Basis von thermoplastischem Polyurethan.

Verschäumt man mit Wasserdampf, so beträgt je nach Art und Menge von TPU und Treibmittel, und der gewünschten Dichte des herzustellenden Schaums, der Druck des Wasserdampfs üblicherweise 1 bis 4, bevorzugt 1,5 bis 3,5 bar (absolut). Dabei ergeben höhere Drucke geringere Dichten des verschäumten TPU, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

In einer Ausführungsform des Suspensionsverfahrens zur Herstellung der expandierten TPU-Partikel wird die erhitzte Suspension nicht abgekühlt, sondern heiß ohne Abkühlen schlagartig entspannt. Beim Entspannen expandiert das zuvor in die TPU-Partikel diffundierte Treibmittel "explosionsartig" und schäumt die erweichten Partikel auf. Man erhält expandierte TPU-Partikel.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der TPU-Partikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst. In der Regel kühlt man die Suspension nach dem Entspannen ab, trennt die expandierten TPU-Partikel in üblicher Weise aus der Suspension ab, entfernt ggf. davor oder danach anhaftendes Suspensionshilfsmittel wie bereits beschrieben, und wäscht und trocknet schließlich die Partikel.

In einer Ausführungsform des Extrusionsverfahrens zur Herstellung der expandierten TPU-Partikel wird die treibmittelhaltige Schmelze ohne Unterwassergranulierung, Wasserringgranulierung oder sonstige Vorkehrungen, die ein Schäumen verhindern, ausgepresst und granuliert. Beispielsweise kann man direkt in die Atmosphäre auspressen. Dabei schäumt der ausgepresste Schmelzestrang auf, und durch Granulieren des aufgeschäumten Strangs erhält man expandierte TPU-Partikel.

Ein bevorzugtes Verfahren zur Herstellung von expandierten TPU-Schaumpartikeln umfasst die Stufen
i) Aufschmelzen von TPU gegebenenfalls mit Zusatzstoffen und Extrusion zu Minigranulat mit einem mittleren Durchmesser von 0,2 bis 10 mm,
ii) Imprägnieren des Minigranulates mit 0,1 bis 40 Gew.-%, bezogen auf das Gesamtgewicht des Granulats, eines flüchtigen Treibmittels in wässriger Suspension unter Druck, bevorzugt bei einem Druck zwischen 5 und 100 bar bei Temperaturen im Bereich von 100 bis 150°C und
iii) anschließendem Entspannen.

Ein weiteres bevorzugtes Verfahren zur Herstellung von expandierten TPU-Partikeln umfasst die Stufen:
i) Aufschmelzen von TPU zusammen mit 0,1 bis 40 Gew.-%, bezogen auf das Gesamtgewicht des Granulats, eines flüchtigen Treibmittels und gegebenenfalls mit Zusatzstoffen auf einem Extruder,
ii) Auspressen der Schmelze und Granulieren des Schmelzestrangs ohne Vorrichtungen, die ein Aufschäumen verhindern.

Besonders bevorzugt und Gegenstand der vorliegenden Erfindung ist somit auch ein Verfahren zur Herstellung von expandiertem thermoplastischen Polyurethan, wobei man ein thermoplastisches Polyurethan mit einer Shore-Härte zwischen A 44 und A 84, bevorzugt zwischen A 62 und A 80, gegebenenfalls zusammen mit Zusatzstoffen zu einem Granulat mit einem mittleren Durchmesser von 0,2 bis 10 mm extrudiert, das Granulat mit 0,1 bis 40 Gew.-%, bezogen auf das Gesamtgewicht des Granulats, eines bevorzugt flüchtigen Treibmittels bevorzugt in wässriger Suspension unter Druck, bevorzugt bei einem Druck zwischen 5 und 100 bar bei Temperaturen im Bereich von 100 bis 150°C imprägniert und anschließend entspannt.

Besonders bevorzugt und Gegenstand der vorliegenden Erfindung ist ferner auch ein Verfahren zur Herstellung von expandiertem thermoplastischen Polyurethan, wobei man ein thermoplastisches Polyurethan mit einer Shore-Härte zwischen A 44 und A 84, bevorzugt zwischen A 62 und A 80, zusammen mit 0,1 bis 40 Gew.-%, bezogen auf das Gesamtgewicht des Granulats, eines bevorzugt flüchtigen Treibmittels gegebenenfalls mit Zusatzstoffen auf einem Extruder aufschmilzt und die Schmelze ohne Vorrichtungen, die ein Aufschäumen verhindert, granuliert.

Gegenstand der vorliegenden Erfindung sind ferner expandierte thermoplastische Polyurethane erhältlich durch derartige Verfahren.

Die TPU-Partikel können vor und/oder nach dem Verschäumen mit einem Antiblockingmittel versehen werden. Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (z.B. C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle. Das Antiblockingmittel wird in der Regel durch Mischen, Aufsprühen, Auftrommeln oder andere übliche Verfahren auf die Partikel aufgebracht. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des TPU, verwendet.

Man erhält in jedem Falle expandierte TPU-Partikel. Bevorzugte Dichten liegen bei 5 bis 600 g/l, und besonders bevorzugt 10 bis 300 g/l.

Die expandierten Partikel sind in der Regel zumindest annähernd kugelförmig und weisen üblicherweise einen Durchmesser von 0,2 bis 20, bevorzugt 0,5 bis 15 und insbesondere 1 bis 12 mm auf. Bei nicht kugelförmigen, z.B. länglichen oder zylinderförmigen Partikeln, ist mit Durchmesser die längste Abmessung gemeint.

Aus den erfindungsgemäßen expandierten TPU-Partikeln kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 8 bis 600 g/l, verschweißen. Die Schaumstoffe können Halbzeuge sein, beispielsweise Platten, Profile oder Bahnen, oder fertige Formteile mit einfacher oder komplizierter Geometrie. Demnach schließt der Begriff TPU-Schaumstoff, Schaumstoffhalbzeuge und Schaumstoff-Formteile ein.

Die Temperatur bei dem Verschweißen der expandierten TPU-Partikel liegt bevorzugt zwischen 100°C und 140°C. Gegenstand der vorliegenden Erfindung sind somit auch Verfahren zur Herstellung von Schaumstoff auf der Basis von thermoplastischem Polyurethan, wobei man das erfindungsgemäße expandierte thermoplastische Polyurethan mittels Wasserdampf mit einer Temperatur zwischen 100°C und 140°C zu einem Formkörper verschweißt.

Gegenstand der Erfindung ist ferner auch die Verwendung der expandierten TPU-Partikel zur Herstellung von TPU-Schaumstoffen, sowie TPU-Schaumstoffe, erhältlich aus den expandierten TPU-Partikeln.

Die erfindungsgemäßen Schaumstoffe können problemlos thermoplastisch recycelt werden. Dazu werden die aufgeschäumten TPU unter Verwendung eines Extruders mit einer Entgasungsvorrichtung extrudiert, wobei der Extrusion gegebenenfalls eine mechanische Zerkleinerung vorangehen kann. Danach können sie in der oben beschriebenen Weise wieder zu Schaumstoffen verarbeitet werden.

Die erfindungsgemäßen Schaumstoffe kommen bevorzugt in energieabsorbierenden Formteilen und Formteilen für den Automobilinnenraum zum Einsatz.

Besonders bevorzugt sind somit auch Helmschalen, Knie- und Ellenbogenschützer, Schuhsohlen, Zwischensohlen, Einlegesohlen sowie Lenkrad-, Türseiten- und Fußraumteile enthaltend die erfindungsgemäßen Schaumstoffe.

Die Erfindung soll an nachfolgenden Beispielen näher erläutert werden:

**Tabelle 1**

| TPU | Weichphase | | | | Thermoplastisches Polyurethan | | | |
|---|---|---|---|---|---|---|---|---|
| | Zusammensetzung [Mol] | | | Molmasse [g/mol] | Zusammensetzung [Mol] | | | Shore- härte |
| | Adipinsäure | Butan-1,4-diol | Poly-THF | | Weichphase | Butan-1,4-diol | 4,4'-MDI | |
| A | 1 | 1 | - | 800 | 1,00 | 0,44 | 1,44 | A78 |
| B | - | - | 1 | 1333 | 1,00 | 0,97 | 1,97 | A72 |

Die Bestimmung der Shore-Härte der PU-Elastomeren erfolgte nach DIN 53 505.

### Beispiel 1

### Herstellung der Schaumpartikel

In einen Autoklaven wurden 100 Teile der in Tabelle 1 angegebenen TPU, die als Granulat mit einem Teilchengewicht von ca. 2 mg vorlagen, 250 Gewichtsteile Wasser, 6,7 Teile Tricalciumphosphat sowie 20 Teile n-Butan unter Rühren eingetragen und auf die in Tabelle 2 angegebene Temperatur erhitzt. Danach wurde der Inhalt des Druckgefäßes durch ein Bodenventil ausgetragen und entspannt, wobei der Druck im Kessel durch Nachpressen von Stickstoff bzw. des eingesetzten Treibmittels konstant gehalten wurde. Die Schaumpartikel wurden durch Waschen mit Salpetersäure und Wasser von den anhaftenden Hilfsmittelresten befreit und bei 50°C mit Luft getrocknet.

Die Imprägnierbedingungen und die erhaltenen Schüttdichten der expandierten Partikel finden sich in Tabelle 2.

**Tabelle 2**

| TPU It. Tabelle 1 | n- Butan [Gew.-Teile] | Temperatur [°C] | Schüttdichte [g/L] |
|---|---|---|---|
| A | 20 | 112 | 300 |
| A | 20 | 114 | 170 |
| B | 20 | 119 | 240 |
| B | 20 | 120 | 190 |
| B | 20 | 122 | 140 |
| B | 20 | 125 | 120 |

### Beispiel 2

### Herstellung der Formteile

Die gemäß Beispiel 1 hergestellten Schaumpartikel wurden unter Druck und Verdichtung in eine vorgeheizte Form eingefüllt. Diese wurde wechselseitig mit Wasserdampf von 1,0 bis 4,0 bar, also bei Temperaturen von 100°C bis 140°C, beheizt.

Anschließend wurde der Druck in der Form abgebaut, diese mit Wasser bzw. Luft gekühlt, geöffnet und das mechanisch stabile Formteil entnommen.

## Patentansprüche

1. Expandierbares, treibmittelhaltiges thermoplastisches Polyurethan, das eine Shore-Härte zwischen A 44 und A 84 aufweist, **dadurch gekennzeichnet, dass** der Schmelzbereich des thermoplastischen Polyurethans bei einer DSC-Messung mit einer Aufheizrate von 20 K/min unterhalb von 130°C beginnt und das thermoplastische Polyurethan bei 190°C und einem Auflagegewicht von 21,6 kg nach DIN EN ISO 1133 höchstens eine Schmelzflussrate (MFR) von 250g/10 min aufweist.

2. Expandierbares, treibmittelhaltiges thermoplastisches Polyurethan nach Anspruch 1, **dadurch gekennzeichnet, dass** das thermoplastische Polyurethan auf Polytetrahydrofuran mit einem Molekulargewicht zwischen 600 g/mol und 2500 g/mol basiert.

3. Expandierbares, treibmittelhaltiges thermoplastisches Polyurethan nach Anspruch 1, **dadurch gekennzeichnet, dass** das thermoplastische Polyurethan auf einem Polyesteralkohol mit einem Molekulargewicht zwischen 600 g/mol und 900 g/mol basiert.

4. Expandierbares, treibmitteihaltiges thermoplastisches Polyurethan nach Anspruch 1, **dadurch gekennzeichnet, dass** das treibmittelhaltige termoplastische Polyurethan einen mittleren Durchmesser zwischen 0,2 und 10 mm aufweist.

5. Expandierbares, treibmittelhaltiges thermoplastisches Polyurethan nach Anspruch 1, **dadurch gekennzeichnet, dass** das treibmittelhaltige thermoplastische Polyurethan zwischen 5 bis 80 Gew.-% organische und/oder anorganische Füllstoffe enthält, bezogen auf das Gesamtgewicht des treibmittelhaltigen thermoplastischen Polyurethans.

6. Verfahren zur Herstellung von expandierbarem, treibmittelhaltigem thermoplastischen Polyurethan, **dadurch gekennzeichnet, dass** man ein thermoplastisches Polyurethan mit einer Shore-Härte zwischen A 44 und A 84, gegebenenfalls zusammen mit Zusatzstoffen, zu einem Granulat mit einem mittleren Durchmesser von 0,2 bis 10 mm extrudiert, das Granulates mit 0,1 bis 40 Gew.-%, bezogen auf das Gesamtgewicht des Granulats, eines Treibmittels in wässriger Suspension unter Druck bei Temperaturen im Bereich von 100 bis 150°C imprägniert, die Suspension enthaltend die treibmittelhaltigen thermoplastischen Polyurethane auf 20 bis 95°C abkühlt und anschließend die treibmittelhaltigen thermoplastischen Polyurethane entspannt.

7. Verfahren zur Herstellung von expandierbarem, bevorzugt partikelförmigem, treibmittelhaltigem thermoplastischen Polyurethan, **dadurch gekennzeichnet, dass** man ein thermoplastisches Polyurethan mit einer Shore-Härte zwischen A 44 und A 84 zusammen mit 0,1 bis 40 Gew.-%, bezogen auf das Gesamtgewicht des Granulats, eines Treibmittels und gegebenenfalls mit Zusatzstoffen auf einem Extruder aufschmilzt und die Schmelze unter Wasser bei Drucken von 2 bar bis 20 bar und Temperaturen zwischen 5°C und 95°C granuliert.

8. Verfahren zur Herstellung von Schaumstoff auf der Basis von thermoplastischem Polyurethan, **dadurch gekennzeichnet, dass** man expandierbares, treibmittelhaltiges thermoplastisches Polyurethan gemäß einem der Ansprüche 1 bis 5 bei einer Temperatur zwischen 100°C und 140°C verschäumt.

9. Schaumstoff auf der Basis von thermoplastischem Polyurethan erhältlich durch ein Verfahren gemäß Anspruch 8.

10. Verfahren zur Herstellung von expandiertem thermoplastischen Polyurethan, **dadurch gekennzeichnet, dass** man ein thermoplastisches Polyurethan mit einer Shore-Härte zwischen A 44 und A 84 gegebenenfalls zusammen mit Zusatzstoffen zu einem Granulat mit einem mittleren Durchmesser von 0,2 bis 10 mm extrudiert, das Granulat mit 0,1 bis 40 Gew.-%, bezogen auf das Gesamtgewicht des Granulats, eines Treibmittels unter Druck bei Temperaturen im Bereich von 100 bis 150°C imprägniert und anschließend entspannt.

11. Verfahren zur Herstellung von expandiertem thermoplastischen Polyurethan, **dadurch gekennzeichnet, dass** man ein thermoplastisches Polyurethan mit einer Shore-Härte zwischen A 44 und A 84 zusammen mit 0,1 bis 40 Gew.-%, bezogen auf das Gesamtgewicht des Granulats, eines Treibmittels gegebenenfalls mit Zusatzstoffen auf einem Extruder aufschmilzt und die Schmelze ohne Vorrichtungen, die ein Aufschäumen verhindert, granuliert.

12. Expandiertes thermoplastisches Polyurethan erhältlich durch ein Verfahren gemäß einem der Ansprüche 10 und 11.

13. Expandiertes thermoplastisches Polyurethan gemäß Anspruch 12, **dadurch gekennzeichnet, dass** das thermoplastische Polyurethan zwischen 5 bis 80 Ges.-% organische und/oder anorganische Füllstoffe enthält, bezogen auf das Gesamtgewicht des thermoplastischen Polyurethans.

14. Verfahren zur Herstellung von Schaumstoff auf der Basis von thermoplastischem Polyurethan, **dadurch gekennzeichnet, dass** man expandiertes thermoplastisches Polyurethan gemäß Anspruch 14 mittels Wasserdampf mit einer Temperatur zwischen 100°C und 140°C zu einem Formkörper verschweißt.

## Claims

1. An expandable thermoplastic polyurethane which comprises blowing agent and which has a Shore hardness of from A 44 to A 84 wherein the melting range of the thermoplastic polyurethane measured by DSC using a heating rate of 20 K/min starts below 130°C, and the thermoplastic polyurethane has at most a melt flow rate (MFR) of 250 g/10 min at 190°C with an applied weight of 21.6 kg to DIN EN ISO 1133.

2. The expandable thermoplastic polyurethane comprising blowing agent according to claim 1, wherein the thermoplastic polyurethane is based on polytetrahydrofuran whose molar mass is from 600 g/mol to 2500 g/mol.

3. The expandable thermoplastic polyurethane comprising blowing agent according to claim 1, wherein the thermoplastic polyurethane is based on a polyester alcohol whose molar mass is from 600 g/mol to 900 g/mol.

4. The expandable thermoplastic polyurethane comprising blowing agent according to claim 1, wherein the average diameter of the thermoplastic polyurethane comprising blowing agent is from 0.2 to 10 mm.

5. The expandable thermoplastic polyurethane comprising blowing agent according to claim 1, wherein the thermoplastic polyurethane comprising blowing agent comprises from 5 to 80% by weight of organic and/or inorganic fillers, based on the total weight of the thermoplastic polyurethane comprising blowing agent.

6. A process for production of expandable thermoplastic polyurethane comprising blowing agent, which comprises extruding a thermoplastic polyurethane whose Shore hardness is from A 44 to A 84, if appropriate together with additives, to give pellets whose average diameter is from 0.2 to 10 mm, impregnating the pellets with from 0.1 to 40% by weight, based on the total weight of the pellets, of a blowing agent in aqueous suspension under pressure at temperatures in the range from 100 to 150°C, cooling the suspension comprising the thermoplastic polyurethanes comprising blowing agent to from 20 to 95°C, and then depressurizing the thermoplastic polyurethanes comprising blowing agent.

7. A process for production of expandable thermoplastic polyurethane, preferably in bead form, comprising blowing agent, which comprises melting a thermoplastic polyurethane whose Shore hardness is from A 44 to A 84 together with from 0.1 to 40% by weight, based on the total weight of the pellets, of a blowing agent and, if appropriate, with additives, in an extruder, and pelletizing the melt under water at pressures of from 2 bar to 20 bar and temperatures of from 5°C to 95°C.

8. A process for production of foam based on thermoplastic polyurethane, which comprises foaming expandable thermoplastic polyurethane comprising blowing agent according to any of claims 1 to 5 at a temperature of from 100°C to 140°C.

9. A foam based on thermoplastic polyurethane obtainable via a process according to claim 8.

10. A process for production of expanded thermoplastic polyurethane, which comprises extruding a thermoplastic polyurethane whose Shore hardness is from A 44 to A 84, if appropriate together with additives, to give pellets whose average diameter is from 0.2 to 10 mm, impregnating the pellets with from 0.1 to 40% by weight, based on the total weight of the pellets, of a blowing agent, under pressure at temperatures in the range from 100 to 150°C, and then depressurizing.

11. A process for production of expanded thermoplastic polyurethane, which comprises melting a thermoplastic polyurethane whose Shore hardness is from A 44 to A 84, together with from 0.1 to 40% by weight, based on the total weight of the pellets, of a blowing agent, if appropriate with additives, in an extruder, and pelletizing the melt without devices which inhibit foaming.

12. An expanded thermoplastic polyurethane obtainable via a process according to claim 10 or 11.

13. The expanded thermoplastic polyurethane according to claim 12, wherein the thermoplastic polyurethane comprises, based on the total weight of the thermoplastic polyurethane, from 5 to 80% by weight of organic and/or inorganic fillers.

14. A process for production of foam based on thermoplastic polyurethane, which comprises using steam with a temperature of from 100°C to 140°C to fuse expanded thermoplastic polyurethane according to claim 14 to give a molding.

## Revendications

1. Polyuréthanne thermoplastique expansible, contenant un agent d'expansion, qui présente une dureté Shore comprise entre A 44 et A 84, **caractérisé en ce que** le domaine de fusion du polyuréthanne thermoplastique commence au-dessous de 130°C dans une mesure par ATD (analyse thermique différentielle) à une vitesse de chauffage de 20 K/min et le polyuréthanne thermoplastique présente au maximum un indice de fluidité à chaud (IFC) de 250 g/10 min à 190 °C et avec une charge de 21,6 kg selon DIN EN ISO 1133.

2. Polyuréthanne thermoplastique expansible, contenant un agent d'expansion, selon la revendication 1, **caractérisé en ce que** le polyuréthanne thermoplastique est à base de polytétrahydrofuranne ayant une masse moléculaire comprise entre 600 g/mole et 2 500 g/mole.

3. Polyuréthanne thermoplastique expansible, contenant un agent d'expansion, selon la revendication 1, **caractérisé en ce que** le polyuréthanne thermoplastique est à base d'un polyesteralcool ayant une masse moléculaire comprise entre 600 g/mole et 900 g/mole.

4. Polyuréthanne thermoplastique expansible, contenant un agent d'expansion, selon la revendication 1, **caractérisé en ce que** le polyuréthanne thermoplastique contenant un agent d'expansion présente un diamètre moyen compris entre 0,2 et 10 mm.

5. Polyuréthanne thermoplastique expansible, contenant un agent d'expansion, selon la revendication 1, **caractérisé en ce que** le polyuréthanne thermoplastique contenant un agent d'expansion contient entre 5 et 80 % en poids de charges organiques et/ou inorganiques, par rapport au poids total du polyuréthanne thermoplastique contenant un agent d'expansion.

6. Procédé pour la production de polyuréthanne thermoplastique contenant un agent d'expansion, **caractérisé en ce qu'**on extrude un polyuréthanne thermoplastique ayant une dureté Shore comprise entre A 44 et A 84, éventuellement conjointement avec des additifs, en un granulé ayant un diamètre moyen de 0,2 à 10 mm, on imprègne le granulé avec 0,1 à 40 % en poids, par rapport au poids total du granulé, d'un agent d'expansion en suspension aqueuse, sous pression à des températures dans la plage de 100 à 150 °C, on refroidit jusqu'à une température de 20 à 95 °C la suspension qui contient les polyuréthannes thermoplastiques contenant un agent d'expansion et ensuite on détend les polyuréthannes thermoplastiques contenant un agent d'expansion.

7. Procédé pour la production de polyuréthanne thermoplastique expansible, de préférence particulaire, contenant un agent d'expansion, **caractérisé en ce qu'**on fait fondre sur une extrudeuse un polyuréthanne thermoplastique ayant une dureté Shore comprise entre A 44 et A 84, conjointement avec 0,1 à 40 % en poids, par rapport au poids total du granulé, d'un agent d'expansion et éventuellement avec des additifs et on soumet la masse fondue à une granulation sous l'eau, sous des pressions de 2 bars à 20 bars et à des températures comprises entre 5 °C et 95°C.

8. Procédé pour la production de mousse à base de polyuréthanne thermoplastique, **caractérisé en ce qu'**on transforme en mousse à une température comprise entre 100 °C et 140 °C un polyuréthanne thermoplastique expansible contenant un agent d'expansion, selon l'une quelconque des revendications 1 à 5.

9. Mousse à base de polyuréthanne thermoplastique pouvant être obtenue par un procédé selon la revendication 8.

10. Procédé pour la production de polyuréthanne thermoplastique expansé, **caractérisé en ce que** qu'on extrude un polyuréthanne thermoplastique ayant une dureté Shore comprise entre A 44 et A 84, éventuellement conjointement avec des additifs, en un granulé ayant une diamètre moyen de 0,2 à 10 mm, on imprègne le granulé avec 0,1 à 40 % en poids, par rapport au poids total du granulé, d'un agent d'expansion, sous pression à des températures dans la plage de 100 à 150 °C, et ensuite on détend.

11. Procédé pour la production de polyuréthanne thermoplastique expansé, **caractérisé en ce que** qu'on fait fondre sur une extrudeuse un polyuréthanne thermoplastique ayant une dureté Shore comprise entre A 44 et A 84, conjointement avec 0,1 à 40 % en poids, par rapport au poids total du granulé, d'un agent d'expansion éventuellement avec des additifs, et on soumet la masse fondue à une granulation sans dispositifs qui empêchent une expansion.

12. Polyuréthanne thermoplastique expansé pouvant être obtenu par un procédé selon l'une quelconque des revendications 10 et 11.

13. Polyuréthanne thermoplastique expansé, selon la revendication 12, **caractérisé en ce que** le polyuréthanne thermoplastique contient entre 5 et 80 % en poids de charges organiques et/ou inorganiques, par rapport au poids total du polyuréthanne thermoplastique.

14. Procédé pour la production de mousse à base de polyuréthanne thermoplastique, **caractérisé en ce qu'**on soude à l'aide de vapeur d'eau, à une température comprise entre 100 °C et 140 °C, un polyuréthanne thermoplastique expansé, selon la revendication 14, en un corps moulé.
